# EUROPÄISCHE PATENTSCHRIFT

(11) **EP 0 503 240 B1**
(45) Veröffentlichungstag und Bekanntmachung des Hinweises auf die Patenterteilung: **14.09.1994**
(21) Anmeldenummer: 92100888.4
(22) Anmeldetag: 21.01.1992
(51) Int. Cl.: B27K 3/50, B27K 5/00

(54) **Konservierungsmittel für Holz und Holzwerkstoffe**
Preservative for wood and wooden materials
Agent préservateur du bois et des matériaux en bois

(30) Priorität: 09.02.1991 DE 4104023
(43) Veröffentlichungstag der Anmeldung: 16.09.1992
(73) Patentinhaber: Ostermann & Scheiwe GmbH & Co, 48155 Münster (DE)
(72) Erfinder: Marx, Hans-Norbert, Dipl.-Ing., W-7580 Bühl-Vimbach (DE); Hermann, Siegbert, Dipl.-Ing., W-4416 Everswinkel (DE)
(74) Vertreter: Schulze Horn, Stefan, Dipl.-Ing. M.Sc.

(56) Entgegenhaltungen:
- EP-A- 0 005 361
- EP-A- 0 022 900
- DE-A- 2 202 448
- US-A- 3 911 134
- PATENT ABSTRACTS OF JAPAN, vol. 9, no. 112 (C-281)(1835), 16. Mai 1985; & JP-A-60 006 604

## Beschreibung

Es ist bekannt und Stand der Technik, ölige Holzschutzmittel und Zubereitungen auf der Basis von organischen Lösemitteln mit Dichlofluanid als Wirkstoff gegen Schimmel-Bläuebefall auszurüsten. Dichlofluanid ist der Common name für das Fungizid N-Dichlorfluormethylthio-N',N'-dimethyl-N-phenylschwefelsäurediamid.

Die Konzentration in Lösungen beträgt meist um 0,5 Gew.-% Dichlofluanid (alle folgenden %-Angaben sind Gew.-%, soweit nicht anders vermerkt); sollen neben den holzverfärbenden Pilzen auch holzzerstörende vorbeugend erfaßt werden, kann die Konzentration bis zu 2 % betragen. Die höheren Konzentrationen (> 1 %) sind schwierig Zu formulieren, weil die Löslichkeit von Dichlofluanid in den üblicherweise verwendeten Lösemitteln (Aliphatenbenzine, Testbenzine, white spirits) nicht sehr hoch ist, so daß Hilfslösemittel (Aromaten, Ester, Ketone, Glykolderivate, etc.) mitverwendet werden müssen. Dieser Umstand begrenzt den ublichen Einsatz auf den Konzentrarionsbereich 0,3 - 1 %.

Weiterhin ist bekannt und Stand der Technik, daß Metallseifen von fungizid wirkenden Metallen, insbesondere Kupfer und Zink, sich als biozide Wirkstoffe für lösemittelhaltige Holzschutzmittel eignen. Der Konzentrationsbereich liegt zwischen 0,1 und 5 %, rechnerisch bezogen auf den Metallgehalt. Als Säuren für die Herstellung solcher Metallseifen eignen sich lineare und verzweigte, aliphatische, alicyclische oder isocyclische Mono- oder Polycarbonsäuren. Die Anzahl der Kohlenstoffatome in diesen Säuren ist in der Regel größer als 5.

Die biozide Wirksamkeit dieser Metallseifen erstreckt sich in erster Linie auf einen vorbeugenden Schutz gegen holzzerstörende Pilze, die Wirksamkeit gegen holzverfärbende Pilze (Schimmel, Bläue) ist weniger stark ausgeprägt.

Als dritter Wirkstoff in Lösemittelzubereitungen zum vorbeudenden Schutz von Holz werden Insektizide gegen holzzerstörende Insekten eingesetzt. Es handelt sich bei diesen Insekten um Lebewesen, die vom Holz oder im Holz leben. Die Besiedelung mit solchen Insekten führt zu einen Festigkeitsverlust durch die minierende Fraßtätigkeit derselben.

Heute ist es Stand der Technik, für den vorbeugenden Schutz von Holz gegen Insektenfraß sog. synthetische Pyrethroide einzusetzen. Die notwendige Konzentration liegt zwischen 0,01 und 0,2 %, je nach Art des Pyrethroides. Weiter ist der Einsatz von Insektiziden anderer Konstitution verbreitet, z.B. chlorierte Kohlenwasserstoffe, wie Lindan, Dieldrin, etc., oder organische Phosphate, Thiophosphate oder Thiononphosphate wie Parathion oder Carbaminsäureester wie Curbaryl oder andere insektizid wirkende Substanzen wie z.B. Chitinsynthesehemmer.

Der übliche Wirkungsumfang eines lösemittelhaltigen Holzschutzmittels erfordert folglich die Kombination je eines Wirkstoffes gegen holzverfärbende Pilze, gegen holzzerstörende Pilze und gegen holzzerstörende Insekten.

Als Beispiel (I) für eine solche Formulierung sei angegeben:

| | |
|---|---|
| 0,5 % | Dichlofluanid |
| 0,1 % | Permethrin |
| 2,0 % | Tributylzinnoxid |
| 6,0 % | Bindemittel (Harze) |
| 91,4 % | Testbenzin |
| 1̅0̅0̅,̅0̅ %̅ | |

Diese Formulierung zeigt bei einer Aufbringmenge von 250 ml pro Quadratmeter Holz eine ausreichende vorbeugende Wirkung gegen holzverfärbende Pilze, holzzerstörende Pilze und holzzerstörende Insekten.

Als Prüfnorm für die Beständigkeit solcher Formulierungen werden die Europanorm EN 46, EN 113 und EN 152 herangezogen, gegebenenfalls mit Alterungsprüfungen nach EN 73 und EN 84.

Im Rahmen der allgemeinen Bestrebungen, biozide Wirkstoffe gezielt, also nicht extensiv einzusetzen und die Ausbringung zu minimieren, stellt sich die Aufgabe, einen möglichst geringen Teil von biozid wirkenden Wirkstoffen zu verwenden, möglichst diese sogar zu vermeiden.

Diese Aufgabe wird gelöst, wenn in einer der vorgenannten Holzschutzmittel Dichlofluanid kombiniert wird mit Zink- und/oder Kupferseifen, insbesondere deren Oktoaten (2-Ethylhexanoate). Allgemein läßt sich die Aufgabe durch lösemittelhaltige Zubereitungen zum vorbeugenden Schutz von Holz gegen holzzerstörende Insekten lösen, die dadurch gekennzeichnet sind, daß Tolylfluanid und/oder Dichlofluanid in einer Konzentration von 0,1 bis 1,0 %, vorzugsweise 0,4 bis 0,6 %, mit Zn- oder Cu- oder Fe- oder Ba- oder Ca-2-ethylhexanoat in einer Konzentration von 0,5 bis 5 %, vorzugsweise 1 bis 2,5 % (bezogen auf Metall) kombiniert werden, wobei die übrige Menge ein geeignetes Lösungsmittel und gegebenenfalls Bindemittel ist.

Die folgenden Beispiele dienen zur Erläuterung der Erfindung.

Kombiniert man Dichlofluanid mit Zink- und/oder Kupferseifen, insbesondere deren Oktoaten nach Beispiel II, dann wird eine insektizide Wirksamkeit erreicht, ohne daß ein Insektizid zugesetzt wurde.

### Erfindungsgemäßes Beispiel II

Es wird ein Gemisch hergestellt aus

| | |
|---|---|
| 0,5 % | Dichlofluanid |
| 2,0 % | Zink (als Oktoat) |
| 6,0 % | Bindemittel (Harze) |
| 91,5 % | Testbenzin |
| 1̅0̅0̅,̅0̅ %̅ | |

Eine Zubereitung nach Beispiel II zeigte in der Prüfung auf vorbeugende insektizide Wirksamkeit nach DIN - EN 46 nach 12 Wochen keine überlebenden Hausbockeilarven (Larven von Hylotropes bajulus).

Das Beispiel zeigt, daß bei einer Mischung gemäß Erfindung auf eine biozide Komponente, in diesem Fall das Insektizid, verzichtet werden kann.

Zum Vergleich sind die Beispiele III und IV angeführt.

### Beispiel III (Vergleichsbeispiel)

| | |
|---|---|
| 0,5 % | Dichlofluanid |
| 6,0 % | Bindemittel (Harze) |
| 93,5 % | Testbenzin |
| 1̅0̅0̅,̅0̅ %̅ | |

Unter den Prüfbedingungen der DIN - ER 46 überleben mehr als 80 % der auf die behandelten Prüfkörper (Dosierung 250 ml (III) pro Quadratmeter Holzoberfläche) aufgesetzten Larven.

Nach diesem Ergebnis ist die Zubereitung nach III als nicht insektizid zu betrachten.

### Beispiel IV (Vergleichsbeispiel)

| | |
|---|---|
| 2,0 % | Zink (als Oktoat) |
| 6,0 % | Bindemittel (Harze) |
| 92,0 % | Testbenzin |
| 1̅0̅0̅,̅0̅ %̅ | |

Unter den Prüfbedingungen der DIN - ER 46 überleben mehr als 60 % der auf die behandelten Prüfkörper (Dosierung 250 ml (IV) pro Quadratmeter Holzoberfläche) aufgesetzten Larven.

Nach diesem Ergebnis ist die Zubereitung nach IV als nicht insektizid zu betrachten.

Die aufgezeigten Beispiele (III und IV) belegen, daß von Dichlofluanid und von der Zinkseife allein keine ausreichende insektizide Wirkung ausgeht.

Bei den erfindungsgemäßen Zubereitungen wird offensichtlich ein Synergismus entwickelt, der in diesem Fall die Wirkung der Kombination auf eine weitere Gruppe von Schadorganismen (Insekten) ausdehnt.

Den gleichen Effekt erzielt man, wenn man Dichlofluanid gegen Tolylfluanid austauscht, Beispiel V.

### Beispiel V

| | |
|---|---|
| 0,5 % | Tolylfluanid |
| 2,0 % | Zink (als Oktoat) |
| 6,0 % | Bindemittel (Harze) |
| 91,5 % | Testbenzin |
| 1̅0̅0̅,̅0̅ %̅ | |

Eine Zubereitung nach Beispiel V zeigte in der Prüfung nach DIN - EN 46 nach 12 Wochen keine überlegenden Hausbockeilarven.

Tauscht man Zink in den Beispielen II und V gegen Kupfer, ebenfalls 2,0 % Metall als Oktoat, aus, erhält man die gleichen Ergebnisse nach DIN - ER 46.

Überraschenderweise zeigen auch Metallseifen von nicht speziell biozid wirkenden Metallen, wie Calzium, Barium und Eisen in Kombination mit Dichlofluanid oder Tolyfluanid eine hohe insektizide Wirksamkeit.

### Beispiele VI bis IX

| Beispiel | VI | VII | VIII | IX |
|---|---|---|---|---|
| Dichlofluanid | 0,5 % | - | 0,5 % | 0,5 % |
| Tolylfluanid | - | 0,5 % | - | - |
| Eisenoktoat | 3,0 % | 3,0 % | - | - |
| Bariumoktoat | - | - | 2,0 % | - |
| Calziumoktoat | - | - | - | 2,0 % |
| Bindemittel | 6,0 % | 6,0 % | 6,0 % | 6,0 % |
| Testbenzin | 90,5 % | 90,5 % | 91,5 % | 91,5 % |
| Summe | 100,0 % | 100,0 % | 100,0 % | 100,0 % |
| DIN - EN 46* | 99 % | 98 % | 100 % | 95 % |

| | | | | |
|---|---|---|---|---|
| * Abtötungsraten bei einer Dosierung von 250 ml pro Quadratmeter Holzoberfläche, Versuchtszeit 12 Wochen. | | | | |

## Patentansprüche

1. Lösemittelhaltige Zubereitung zum vorbeugenden Schutz von Holz und Holzwerkstoffen,
dadurch gekennzeichnet, daß Tolylfluanid und/oder Dichlofluanid in einer Konzentration von 0,1 bis 1,0 %, vorzugsweise 0,4 - 0,6 %, mit Zn- oder Cu- oder Fe- oder Ba- oder Ca-2-ethylhexanoat in einer Konzentration von 0,5 - 5 %, vorzugsweise 1 - 2,5 %, (bezogen auf Metall) kombiniert werden, wobei die übrige Menge ein geeignetes Lösungsmittel und gegebenenfalls Bindemittel ist.

2. Lösemittelhaltige Zubereitung nach Anspruch 1 oder 2, dadurch gekennzeichnet, daß es sich um Zink- und Kupfer-2-ethylhexanoat handelt.

## Claims

1. Solvent-containing preparation for use as a preservative conservation for wood and wood-based material, characterized by combining tolylfluanid and/or dichlofluanid (N-dichlorofluoromethylthio-N',N'-dimethyl-N-phenylsulfuric diamide) in a concentration of 0.1 to 1.0 % by weight, preferably 0.4 to 0.6 % by weight, and the 2-ethylhexanoate of Zn or Cu or Fe or Ba or Ca in a concentration of 0.5 to 5 % by weight, preferably 1 to 2.5 % (by weight of metal), the remainder being a suitable solvent and optionally a binding agent.

2. Solvent-containing preparation as claimed in claim 1, characterized by enclosing the 2-ethylhexanoate of zinc or copper.

## Revendications

1. Préparation contenant des solvants pour la protection préventive du bois et des matériaux en bois, caractérisée en ce que du tolylfluanide et/ou du dichlofluanide à une concentration de 0,1 à 1,0 %, de préférence de 0,4 à 0,6 %, sont associés à du 2-éthylhexanoate de Zn ou de Cu ou de Fe ou de Ba ou de Ca à une concentration de 0,5 à 5 %, de préférence de 1 à 2,5 % (par rapport au métal), le reste étant un solvant approprié et le cas échéant un liant.

2. Préparation contenant des solvants selon les revendications 1 ou 2, caractérisée en ce qu'il s'agit d'un 2-éthylhexanoate de zinc et de cuivre.
